# EUROPEAN PATENT SPECIFICATION

(11) **EP 2 730 353 B1**
(45) Date of publication and mention of the grant of the patent: **14.09.2022**
(21) Application number: 12192307.2
(22) Date of filing: 12.11.2012
(51) Int. Cl.: B22F 3/105

(54) **Additive layer manufacturing method and apparatus**
Zusatzschichtherstellungsverfahren und Vorrichtung
Procédé et appareil de fabrication de couche d'additif

(43) Date of publication of application: 14.05.2014
(73) Proprietor: Airbus Operations GmbH, 21129 Hamburg (DE)
(72) Inventor: Syassen, Freerk, 26936 Stadland (DE)
(74) Representative: Bird & Bird LLP

(56) References cited:
- EP-A1- 1 151 849
- WO-A1-92/08592
- WO-A1-2004/056510
- DE-A1- 19 818 469
- JP-A- 2003 129 862
- JP-A- 2011 256 435
- LEVY ET AL: "RAPID MANUFACTURING AND RAPID TOOLING WITH LAYER MANUFACTURING (LM) TECHNOLOGIES, STATE OF THE ART AND FUTURE PERSPECTIVES", CIRP ANNALS, ELSEVIER BV, NL, CH, FR, vol. 52, no. 2, 1 January 2003 (2003-01-01), pages 589-609, XP022127943, ISSN: 0007-8506, DOI: 10.1016/S0007-8506(07)60206-6
- Ian Gibson ET AL: "Material properties and fabrication parameters in selective laser sintering process", RAPID PROTOTYPING JOURNAL, vol. 3, no. 4, 1 December 1997 (1997-12-01), pages 129-136, XP055301397, GB ISSN: 1355-2546, DOI: 10.1108/13552549710191836

## Description

The present invention relates to a method of manufacturing a three-dimensional object by additive layer manufacturing (ALM), in particular selective laser melting (SLM) or direct material deposition (DMD), and to a corresponding apparatus for manufacturing a three-dimensional object by additive layer manufacturing.

Additive layer manufacturing is increasingly used for rapidly manufacturing prototype or even final components and is then also referred to as rapid prototyping and rapid manufacturing, respectively. In contrast to conventional manufacturing methods involving removal of material from a block of material by, e.g., cutting, drilling or other machining processes, additive layer manufacturing directly constructs a desired three-dimensional object layer by layer from a digital representation of the object. It is also known as 3D printing.

A typical additive layer manufacturing method comprises providing a thin layer of material from which the product is to be manufactured in powder form on a support plate, melting, curing or sintering the powder in those portions of the layer corresponding to the product being manufactured by means of laser irradiation, subsequently providing a further thin layer of the material on top of the initial layer and again melting, curing or sintering the powder of the layer in those portions of the layer corresponding to the product being manufactured by means of laser irradiation, and repeating the process until the complete object is obtained. In each layer the powder not corresponding to the product is not irradiated and remains in powder form, so that it can be removed from the object at a later stage. The support plate may be provided by a movable table that - after each irradiation of a layer - is lowered a distance equal to the thickness of that layer to provide for a defined starting condition for the provision of each layer.

In this regard, it is to be noted that it is in principle possible that the individual layers are not entire or continuous layers of material, but comprise material only in the areas corresponding to the object being manufactured or in selected regions comprising those areas.

For example, WO 92/08592 A1 discloses an apparatus for fabricating parts by selective laser sintering. Further, for example EP 1 151 849 A1 discloses a process for forming three-dimensional objects layer-by-layer from a photocurable medium using differential curing of the photocurable medium to form cured solid regions with discrete mechanical properties at selected locations.

Known additive layer manufacturing methods as described above are carried out in chambers in which a tightly controlled constant inert gas atmosphere, e.g. argon, is maintained in order to avoid as far as possible reactions between the layers and surrounding gases upon laser irradiation.

Particular additive layer manufacturing methods of this type are also referred to as selective laser melting (SLM) or direct material deposition (DMD). In this regard, it is noted that instead of using a laser beam it is also possible to use an electron beam for the same purposes. A particular additive layer manufacturing method utilizing an electron beam is also referred to as electron beam melting (EBM).

As noted above, the object is built up layer by layer in a three-dimensional manner. This makes it possible to efficiently and rapidly manufacture different highly complex objects from various materials, in particular metal materials, but also plastic materials and ceramic materials, using one and the same apparatus. For example, highly complex grid or honeycomb structures which are difficult to produce using other techniques can be easily manufactured. As compared to traditional methods, the complexity of the object has only little influence on the manufacturing costs.

In spite of these advantages known additive layer manufacturing methods also have a major drawback in that it is difficult and complicated to provide for different material characteristics in different parts of the manufactured object. For example, the material can be changed between different layers, but such change is time consuming, difficult to implement and adds to the manufacturing costs. Additive layer manufacturing methods have this drawback in common with other common manufacturing techniques, such as, e.g., molding, casting, forging or cutting. It is in general difficult or impossible to manufacture graduated objects.

It is therefore an object of the present invention to provide a method and a system for manufacturing a three-dimensional object by additive layer manufacturing enabling to selectively change the material properties in different parts of the object being manufactured in a simple, rapid and cost efficient manner.

This object is achieved by a method having the features of claims 1 and by an apparatus having the features of claim 13. Advantageous embodiments of the method and the apparatus are the subject-matter of the respective dependent claims.

According to the present invention a method of manufacturing a three-dimensional object by additive layer manufacturing, comprising - in accordance with the prior art methods described above - successively providing a plurality of layers of material in powder form, one on top of the other, on a support means inside a chamber, which is also referred to as build chamber, and irradiating each layer with a laser or particle beam prior to providing the subsequent layer. Although using a laser beam is preferred, in some applications the use of a particle beam may also be advantageous. For example, provided that low pressures can be present inside the chamber, the irradiation may be effected by means of an electron beam.

Typically the layers have thicknesses in the range of 20 to 100 µm, wherein the thicknesses are selected based on the desired surface finish quality and processing speed. Each layer is irradiated selectively only in those portions of the layer corresponding to the three-dimensional object being manufactured, and the irradiation is carried out in such a manner that the material of the respective layer is melted or sintered locally in the irradiated portions. This local melting or sintering serves to fuse the powder particles in the irradiated zones together and to the preceding layer.

During the entire manufacturing process or at least during each of the laser or particle beam irradiation steps a gas atmosphere having a controlled pressure and composition is maintained inside the chamber. However, different from known additive manufacturing methods at least one of the pressure and composition of the gas atmosphere inside the chamber and the temperature of the gas atmosphere and/or the temperature of the layers are selectively changed in the course of the manufacturing process or at least during each of the laser or particle beam irradiation steps in order to selectively achieve different characteristics for different layers in the three-dimensional object manufactured.

At least one of the pressure and the composition of the gas atmosphere inside the chamber is controlled such that at least two different gas atmospheres having different predetermined pressures and/or compositions are present inside the chamber during the irradiation of different ones of the layers. In other words, the pressure, the composition or the pressure and composition of the gas atmosphere inside the chamber is changed in the course of the process such that the gas atmosphere in which one or more of the layers are irradiated is different from the gas atmosphere in which others of the layers are irradiated. Thus, two or more different gas atmospheres may be used for irradiating different subsets of the plurality of layers. This necessitates that the gas atmosphere is changed between the irradiation of one or more pairs of adjacent layers.

In an exemplary embodiment, additionally the beam spot size of the laser beam or the particle beam used for irradiating each of the layers is controlled such that at least two different beam spot sizes are utilized during the irradiation of different ones of the layers. Thus, two or more different beam spot sizes may be used for irradiating different subsets of the plurality of layers. This necessitates that the beam spot size is changed between the irradiation of one or more pairs of adjacent layers. As conventionally used, in the present application the term beam spot size designates the size of the beam spot on the surface of the layer currently irradiated, which surface is the surface onto which the beam is incident. For example, the beam spot size may, in particular, be the area of the beam spot. The beam spot size generally determines the size or area of the irradiationinduced melting zone.

Furthermore, the temperature of the gas atmosphere inside the chamber is controlled such that at least two different temperatures of the gas atmosphere and/or the temperature of the layer being irradiated is controlled such that at least two different temperatures of the layer being irradiated are present during the irradiation of different ones of the layers. In other words, the gas atmosphere temperature, the layer temperature or both the gas atmosphere temperature and the layer temperature is changed in the course of the process such that the respective temperature or temperatures during irradiation of some of the layers is or are different from the respective temperatures during irradiation of others of the layers. Thus, two or more different gas atmosphere temperatures and/or layer temperatures may be used for irradiating different subsets of the plurality of layers. This necessitates that the respective temperature is changed between the irradiation of one or more pairs of adjacent layers.

It has been found that by selectively using different gas atmospheres for different layers it is easily possible to selectively influence and adjust the material properties of the corresponding portions of the object manufactured. In particular, controlled amounts of particular reactive gases can be mixed with an inert gas, such as argon, which reactive gases have a controlled impact on the material properties of the respective layers, such as, e.g., strength and/or ductility. The necessary changes in the gas atmosphere can be effected rapidly and in a simple manner while adding only little costs to the method and apparatus. Aside from the adaptation and control of the gas atmosphere the selective adjustment of the material properties does not require additional work steps and is implemented as part of the normal manufacturing process.

Similar considerations also apply to the above parameters beam spot size and temperature. By selectively using different beam spot sizes, gas atmosphere temperatures and/or layer temperatures for different layers it is likewise easily possible to selectively influence and adjust the material properties of the corresponding portions of the object manufactured. In particular, the amount of intake of gases from the gas atmosphere by the layers, in particular of specific reactive gases mixed with an inert gas, such as argon, which reactive gases have a controlled impact on the material properties of the respective layers, such as, e.g., strength and/or ductility, can be efficiently controlled by suitably selecting the above parameters. The necessary changes in the beam spot size and/or the temperatures can be effected rapidly and in a simple manner while adding only little costs to the method and apparatus. Aside from the adaptation and control of one or more of these parameters the selective adjustment of the material properties does not require additional work steps and is implemented as part of the normal manufacturing process.

In a preferred embodiment the plurality of layers used for building up the object is constituted by two or more different groups, i.e. sets or subsets, of layers, each group including only one layer or multiple adjacent layers. Thus, each layer of the plurality of layers is included in one and only one of the groups. Making use of the first of the above three options, the pressure, the composition or the pressure and composition of the gas atmosphere inside the chamber is then changed between adjacent groups, but for all layers belonging to the same group the same gas atmosphere having the same pressure and composition is maintained inside the chamber during their irradiation. Consequently, for at least one of the groups a different gas atmosphere having a different predetermined pressure and/or composition is present inside the chamber during the irradiation of the corresponding layers as compared to the other group or groups. In other words, at least one of the pressure and the composition of the gas atmosphere inside the chamber is controlled such that for at least two different groups of layers different gas atmospheres having different predetermined pressures and/or compositions are present inside the chamber during the irradiation of the layers of the different groups. If there are more than two groups it is possible that different gas atmospheres are used for all groups, or some of the groups, which are not adjacent to each other, may use the same gas atmosphere. For example, the latter case may be used for objects comprising one the one hand functionally loaded portions, which require a high strength and are formed using a first gas atmosphere, and intermediate connecting portions, which are preferably ductile in order to avoid problems with small gaps and are formed using a different second gas atmosphere.

In a further preferred embodiment, which may be combined with the preceding embodiment, the plurality of layers used for building up the object is constituted by two or more different groups, i.e. sets or subsets, of layers, each group including only one layer or multiple adjacent layers. Thus, each layer of the plurality of layers is included in one and only one of the groups. If this embodiment is used in combination with the preceding embodiment, the groups may be the same or different with respect to the two embodiments. Making use of the second of the above three options, the beam spot size is then changed between adjacent groups, but for all layers belonging to the same group the same beam spot size is maintained during their irradiation. Consequently, for at least one of the groups a different beam spot size is used during the irradiation of the corresponding layers as compared to the other group or groups. In other words, the beam spot size is controlled such that for at least two different groups of layers different beam spot sizes are utilized during the irradiation of the layers of the different groups. If there are more than two groups it is possible that different beam spot sizes are used for all groups, or some of the groups, which are not adjacent to each other, may use the same beam spot size. For example, the latter case may be used for objects comprising one the one hand functionally loaded portions, which require a high strength and are formed using a first beam spot size, and intermediate connecting portions, which are preferably ductile in order to avoid problems with small gaps and are formed using a different beam spot size.

Similarly, in a further preferred embodiment, which may be combined with each or both of the two preceding embodiments, the plurality of layers used for building up the object is constituted by two or more different groups, i.e. sets or subsets, of layers, each group including only one layer or multiple adjacent layers. Thus, each layer of the plurality of layers is included in one and only one of the groups. If this embodiment is used in combination with one or both of the two preceding embodiments, the groups may be the same or different with respect to all or some of the three embodiments. Making use of the third of the above three options, the gas atmosphere temperature and/or layer temperature is then changed between adjacent groups, but for all layers belonging to the same group the same gas atmosphere temperature and/or layer temperature is maintained during their irradiation. Consequently, for at least one of the groups a different gas atmosphere temperature and/or layer temperature is used during the irradiation of the corresponding layers as compared to the other group or groups. In other words, the gas atmosphere temperature and/or layer temperature is controlled such that for at least two different groups of layers different gas atmosphere temperatures and/or layer temperatures are utilized during the irradiation of the layers of the different groups. If there are more than two groups it is possible that different gas atmosphere temperatures and/or layer temperatures are used for all groups, or some of the groups, which are not adjacent to each other, may use the same gas atmosphere temperature and/or layer temperature. For example, the latter case may be used for objects comprising one the one hand functionally loaded portions, which require a high strength and are formed using a first gas atmosphere temperature and/or layer temperature, and intermediate connecting portions, which are preferably ductile in order to avoid problems with small gaps and are formed using a different gas atmosphere temperature and/or layer temperature.

In principle it is possible that in the above manner each layer of e.g. typically thousands of layers building up the object is selectively provided with individual material properties. Thus, depending on the embodiment, the gas atmosphere, the beam spot size, the gas atmosphere temperature and/or the layer temperature would then be changed between each two layers. In that case each group would include only one layer, and in the extreme case different gas atmospheres, beam spot sizes, gas atmosphere temperatures and/or layer temperatures would be used for all of the layers.

However, in practice it is preferred that the number of groups is limited and that most or all of the groups include more than one layer. For example, the total number of groups may be two or three in order to limit the impact on the simplicity and speed of the manufacturing process. This approach results in an object having a corresponding number of continuous portions having different material properties.

In these embodiments, it is advantageously possible to select for the group of layers including the first layer provided and/or for the group of layers including the last layer provided, i.e. for one or both of the groups including a layer defining an outer surface of the manufactured object, the corresponding gas atmosphere, the beam spot size, the gas atmosphere temperature and/or the layer temperature in such a manner that desired physical and/or chemical characteristics of the respective surface are obtained. Thus, it is easily possible to provide the object with specific functional surfaces. If only the properties of one or both surfaces shall be influenced, it is preferable to use only two and three groups, respectively, wherein the group including the layer or layers defining the surface or surfaces at issue may be chosen to include as few layers as possible. In any case, functional surfaces can be generated without post-processing during the normal manufacturing process in the same manner in which bulk properties of the object are controlled.

In a further preferred embodiment, which may be combined with any of the above embodiments, the pressure, the composition or the pressure and composition of the gas atmosphere inside the chamber is gradually changed between first and second predetermined values for a plurality of adjacent ones of the layers when moving from the first to the last layer of that plurality of adjacent layers. In other words, using the above terminology, each layer of that plurality of layers forms an own group or set (including only the corresponding layer). A first predetermined gas atmosphere is selected for the layer of the plurality of adjacent layers which is provided first. For each subsequent layer of the plurality of adjacent layers the gas atmosphere is gradually changed as compared to the gas atmosphere used for the previous layer such that for the last layer of the plurality of adjacent layers a second predetermined gas atmosphere different from the first predetermined gas atmosphere is achieved. In this manner it is advantageously possible to construct portions of the object exhibiting a gradient in one or more material properties, and the gradual changes from layer to layer and the first and second predetermined gas atmospheres are preferably chosen to obtain a desired gradient in one or more specific material properties.

In a further preferred embodiment, which may be combined with any of the above embodiments, the same applies to the beam spot size, i.e. the beam spot size is gradually changed between first and second predetermined values when moving from the first to the last layer of the plurality of adjacent layers.

Similarly, in a further preferred embodiment, which may be combined with any of the above embodiments, the same applies to the gas atmosphere temperature and/or the layer temperature, i.e. the gas atmosphere temperature and/or the layer temperature is gradually changed between first and second predetermined values when moving from the first to the last layer of the plurality of adjacent layers.

In a preferred embodiment making use of the first of the above three options the composition of the gas atmosphere inside the chamber is controlled such that all or at least some of the different gas atmospheres comprise different oxygen and/or different nitrogen levels. Oxygen and nitrogen are particular examples of reactive gases which are suitable for influencing the material properties of specific materials.

For example, in a preferred embodiment in which the material in powder form is or comprises titanium or a titanium alloy, preferably Ti₆Al₄V, the oxygen level is suitable to control the strength and the ductility provided by the corresponding layers. In particular, it has been found that an increase in oxygen level results in increased strength but decreased ductility, and that a decrease in oxygen level results in decreased strength but increased ductility.

As a further example, in a preferred embodiment in which the material in powder form is or comprises steel, the nitrogen level is suitable to control various material properties, such as the corrosion resistance.

In a preferred embodiment making use of the first of the above three options the pressure, the composition or the pressure and composition of the different gas atmospheres are selected such that the layers irradiated under different atmospheres have different physical characteristics.

In a preferred embodiment making use of the second of the above three options the beam spot size is selected such that the layers irradiated with different beam spot sizes have different physical characteristics.

In a preferred embodiment making use of the third of the above three options the gas atmosphere temperature, the layer temperature or both the gas atmosphere and layer temperatures are selected such that the layers irradiated using different gas atmosphere and/or layer temperatures have different physical characteristics.

In a preferred embodiment the material in powder form is selected from the group consisting of metal material, plastic material, ceramic material and glass material. In this regard, the material in powder form may include only a single specific one of these materials or a mixture of one or more different materials.

The above-described method can be advantageously carried out using an apparatus which comprises a housing defining a chamber, a gas supply system adapted for introducing gas into the chamber, a gas venting system adapted for venting gas from the chamber, a support means disposed inside the chamber, a powder delivery means for providing the plurality of layers of material in powder form one on top of the other on the support means, a temperature control means adapted for selectively controlling the temperature of the gas atmosphere present inside the chamber and/or of the layers during irradiation thereof, an irradiation device, such as an electron beam device or preferably a laser device, adapted for irradiating each of the layers provided by the powder delivery means on the support means with a laser or particle beam, a beam spot size control means adapted for selectively controlling the spot size of a beam emitted by the irradiation device on the layers during irradiation thereof, a beam movement means - i.e. a laser or particle beam movement means - adapted for selectively irradiating only portions of each of the layers provided by the powder delivery means on the support means, a storage means for storing a digital representation of a three-dimensional object in the form of a plurality of layers, and a control unit operatively coupled to the gas supply system, the gas venting system, the powder delivery means, the temperature control means, the irradiation device, the beam spot size control means, the beam movement means and the storage means and adapted for operating the powder delivery means, the irradiation device and the beam movement means to manufacture a three-dimensional object in accordance with a digital representation of the object stored in the storage means. To this extent the apparatus corresponds to known apparatuses for additive layer manufacturing.

The storage means is further adapted for storing, for each digital representation of a three-dimensional object stored in the storage means and as a function of the layers of the digital representation, pressure data, in particular digital pressure data, composition data, in particular digital composition data, or both pressure and composition data representative of different gas atmospheres having different predetermined pressures and/or compositions, optionally beam spot size data, in particular digital beam spot data, representative of different beam spot sizes, and/or temperature data, in particular digital temperature data, representative of different gas atmosphere temperatures and/or layer temperatures. Thus, the digital file stored in the storage means for defining layer by layer the structure of an object to be manufactured is extended with data defining the gas atmospheres to be used for the individual layers, the beam spot sizes to be used for the individual layers, and/or the gas atmosphere temperatures and/or layer temperatures to be used for the individual layers. The latter data can be provided, for example, as separate data sets for each layer, as data defining the above-described groups and the gas atmospheres, the beam spot sizes, the gas atmosphere temperatures and/or the layer temperatures for the groups, or as data describing if and how the gas atmosphere, the beam spot size, the gas atmosphere temperature and/or the layer temperature is to be changed when moving from one layer to the next. For each particular application, the choice of the type of data stored in the storage means depends, of course, on which of the three above-mentioned options are to be realized in the respective method to be carried out with the apparatus.

Finally, the control unit is further adapted for automatically controlling the pressure and composition of the gas atmosphere inside the chamber in accordance with pressure and/or composition data stored in the storage means for the three-dimensional object being manufactured, optionally automatically controlling the beam spot size in accordance with beam spot size data stored in the storage means for the three-dimensional object being manufactured, automatically controlling the gas atmosphere temperature and/or the layer temperature in accordance with temperature data stored in the storage means for the three-dimensional object being manufactured. This requires, of course, that the control unit is adapted for reading out the pressure and/or composition data, the beam spot data and/or the temperature data from the storage means. For achieving the above control the control unit is operatively coupled with the gas supply system and the gas venting system (at least if the first option is to be realized), with the beam spot size control means (at least if the second option is to be realized) and/or with the temperature control means (at least if the third option is to be realized) and is adapted for automatically controlling them in a suitable manner.

In this regard, the gas supply system preferably includes gas storage means for one gas or several different gases and suitable valve means allowing for selective introduction of the respective gases into the chamber and for selectively opening and sealingly closing the chamber towards the gas supply system. Further, the gas venting system preferably comprises one or more valves for selectively opening and closing the chamber towards the environment or a gas receptacle, and preferably also a pump adapted for pumping selective amounts of gas out of the chamber.

Further, the beam spot size control means preferably includes an adjustable focusing means, such as an adjustable lens system, or alternatively or in addition a means adapted for adjusting the distance between the irradiation device and the irradiated surface of the layer being irradiated, i.e. the upper surface of the topmost layer or the surface of the layer onto which the beam is incident. In this respect the irradiation device includes a focusing means for focusing the beam onto the surface, and the adjustable distance is the distance - along the beam path - between the focusing means and the surface. The distance may be adjusted by either moving the focussing means or, more preferably, by suitably moving the support means, which must already be movable for receiving the various layers.

Further, the temperature control means preferably includes a heating and/or cooling device thermally coupled to the gas atmosphere and/or the layers. With respect to the coupling to the layers, the heating and/or cooling device may e.g. be thermally coupled to the support means.

Further, it is preferred that the apparatus comprises a gas atmosphere detector system adapted for detecting the pressure, the composition or both the pressure and composition of the gas atmosphere present inside the chamber. The control unit is then operatively coupled with the gas atmosphere detector system and in use receives detection signals characteristic of the pressure and/or composition from the gas atmosphere detection system, and the control unit is adapted for controlling the gas atmosphere on the basis of the received detection signals.

Further, it is preferred that the apparatus comprises a temperature detector system adapted for detecting the gas atmosphere temperature, the layer temperature or both the gas atmosphere temperature and the layer temperature. The control unit is then operatively coupled with the temperature detector system and in use receives detection signals characteristic of the gas atmosphere temperature and/or layer temperature from the temperature detection system, and the control unit is adapted for controlling the respective temperature on the basis of the received detection signals.

In the following an embodiment of the invention is explained in more detail with reference to the drawings.
- Figure 1: is a schematic representation of an apparatus according to the invention for manufacturing a three-dimensional object by selective layer melting.
- Figure 2: is a schematic representation of a three-dimensional object to be manufactured.
- Figure 3: is a flow chart of an embodiment of a method according to the invention for manufacturing a three-dimensional object by additive layer manufacturing.

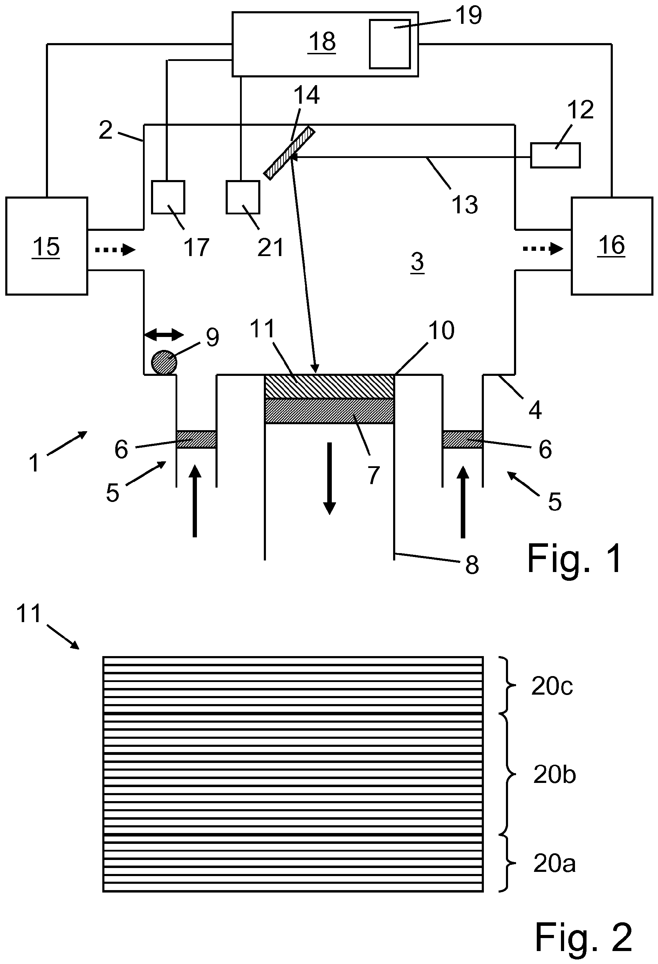

The apparatus 1 for selective laser melting (SLM) shown in Figure 1 comprises a housing 2 defining an interior chamber 3. In the bottom wall 4 of the housing 2 two integrated powder containers 5 are provided, each having a bottom provided by a movable powder feed piston 6. Further, a portion of the bottom wall 4 of the housing 2 is defined by a movable build platform 7. More particularly, the build platform 7 is movable upwardly and downwardly inside a channel-shaped extension 8 of the housing 2 and sealingly engages the channel walls thereof.

In operation powder stored in the powder containers 5 is fed into the chamber 3 by moving upwardly one or both of the powder feed pistons 6 and is distributed as a thin layer on the top surface of the build platform 7 or of a partial object 11 disposed thereon by operating a powder spreading roller 9 which is movable in the horizontal direction. In this regard, prior to operating the powder spreading roller 9 the build platform 7 is moved downwardly inside the channel 8 such that the vertical distance between the upper end 10 or the bottom wall 4 of the housing 2 and the top surface of the build platform 7 or a partial object 11 disposed thereon is identical to the thickness of the powder layer to be distributed.

After each powder layer has been distributed a laser 12 is operated to irradiate the layer with a laser beam 13. The laser beam 13 is moved over the layer by means of a movable mirror 14, and the laser 12 and the mirror 14 are operated in such a manner that only selective portions of the layer are irradiated. In those portions the powder melts and forms a part of a three-dimensional object corresponding to the respective layer.

Following the irradiation the above steps are repeated, i.e. the build platform 7 is moved downwardly by a distance corresponding to the thickness of the subsequent layer, and the subsequent layer is provided on top of the previous layer by means of the powder feed pistons and the powder spreading roller 9 and is irradiated by means of the laser 12 and the mirror 14.

The above process is carried out automatically under the control of a control unit 18. For this purpose, the control unit 18 is operatively coupled to the powder feed pistons 6, the build platform 7, the powder spreading roller 9, the laser 12 and the mirror 14 (for reasons of clarity of the Figure these couplings are not shown in the Figure) such that it can move and operate these elements as described above. The control is effected on the basis of digital data stored in a memory 19 of the control unit 18. For manufacturing a particular three-dimensional object, digital data are stored in the memory 19 describing layer for layer the structure of the object.

During irradiation of each of the layers a defined gas atmosphere is maintained inside the chamber 3. For this purpose, the apparatus 1 comprises a gas supply system 15 and a gas venting system 16. The gas supply system 15 comprises suitable tanks or containers for one or more gases and one or more valves and pumps for selectively introducing gas from one or more of the tanks or containers into the chamber 3. The gas venting system 16 comprises one or more valves and pumps for removing gas from the chamber 3. Further, a detector 17 is disposed inside the chamber 3, which detector 17 is operable to detect particular characteristics of the gas atmosphere present inside the chamber 3 and to provide corresponding detection signals.

As shown in Figure 1, the gas supply system 15, the gas venting system 16 and the detector 17 are operatively coupled to the control unit 18 such that in operation the control unit 18 can send control signals to the gas supply system 15 and the gas venting system 16 and can receive status signals from the gas supply system 15 and the gas venting system 16 and the detection signals provided by the detector 17.

This allows for an automatic control of the gas atmosphere by the control unit 18. This control is likewise effected on the basis of digital data stored in the memory 19 of the control unit 18. For manufacturing a particular three-dimensional object, in addition to the digital data mentioned above further digital data are stored in the memory 19 describing the gas atmosphere to be created and maintained in the chamber 3 for the individual layers. For example, digital data may be stored which divide the plurality of layers represented by the other digital data stored for the object in the memory 19 into two or more separate groups or sets, each including a plurality of adjacent layers. Figure 2 schematically illustrates a layered representation of an object to be manufactured, wherein three groups 20a, 20b, 20c of layers are defined. Further, digital data are stored for each group defining the gas atmosphere to be maintained during the irradiation of the layers belonging to the respective group. On the basis of these digital data, which retrieved by the control unit 18 from the memory 19, a corresponding control of the gas atmosphere is effected as described above.

As can be taken from the example shown in Figure 2, it is therefore possible to selectively provide the two surface regions corresponding to the groups 20a and 20c with characteristics different from the characteristics of the bulk group 20b.

According to the illustrated embodiment, the apparatus 1 may also include a heating and cooling device 21 disposed inside the chamber 3 and adapted for measuring the temperature of the gas atmosphere inside the chamber 3. Such a heating and cooling device 21 can then be used for maintaining during irradiation of each of the layers a defined gas atmosphere temperature inside the chamber 3. Further, the detector 17 or a separate detector is then also configured to detect the gas atmosphere temperature inside the chamber 3 and to provide corresponding detection signals to the control unit 18. As shown in Figure 1, the heating and cooling device 21 is likewise coupled to the control unit 18, such that in operation the control unit 18 can send control signals to the heating and cooling device 21 and can receive detection signals provided by the detector 17.

This allows for an automatic control of the gas atmosphere temperature by the control unit 18. The control is effected in a manner corresponding to the automatic control of the gas atmosphere, i.e. for manufacturing a particular three-dimensional object, in addition to the digital data mentioned above further digital data are stored in the memory 19 describing the gas atmosphere temperature to be established and maintained in the chamber 3 for the individual layers. The effects, advantages and possibilities are the same as the one described above for the automatic control of the gas atmosphere.

According to the illustrated embodiment the control unit 18 may also be adapted for positioning the build platform 7, after each layer has been provided on top of the build platform 7 or the preceding layers, such that the upper surface of the topmost layer is located at a height resulting in a particular beam spot size. This allows for an automatic control of the beam spot size by the control unit 18. The control is effected in a manner corresponding to the automatic control of the gas atmosphere and the automatic control of the gas atmosphere temperature, i.e. for manufacturing a particular three-dimensional object, in addition to the digital data mentioned above further digital data are stored in the memory 19 describing the beam spot size to be established and maintained for the individual layers. The effects, advantages and possibilities are the same as the one described above for the automatic control of the gas atmosphere.

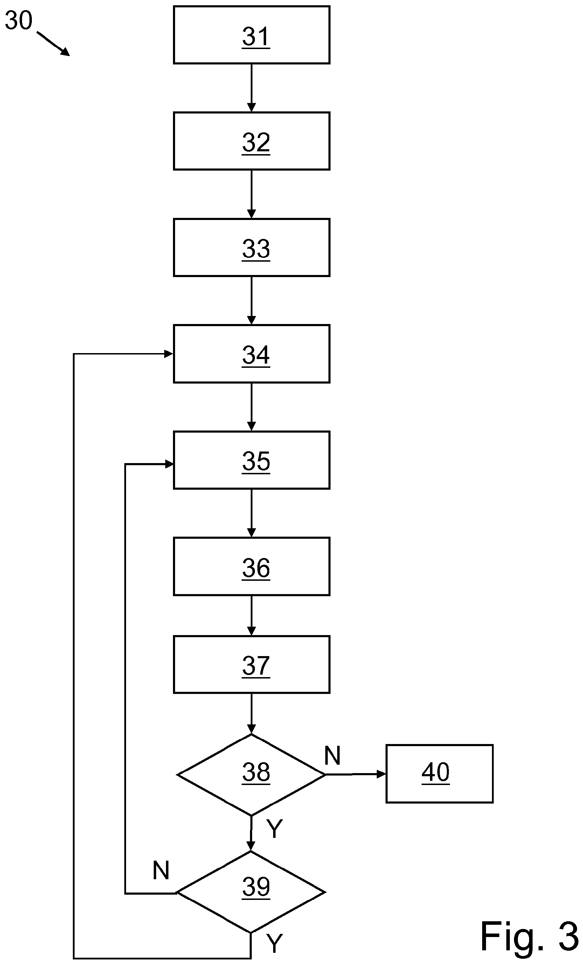

Figure 3 shows an embodiment of a method 30 of manufacturing a defined three-dimensional object using the apparatus 1.

In step 31 digital data are stored in the memory 19 describing layer for layer the structure of the object. These data are adapted for providing information to the control unit 18 allowing it to control the powder feed pistons 6, the build platform 7, the powder spreading roller 9, the laser 12 and the mirror 14 are operated such that the final object has the desired structure.

In step 32 digital data are stored in the memory 19 defining two or more groups 20a, 20b, 20c of layers, wherein all layers building up the object are divided into these groups 20a, 20b, 20c (see also Figure 2).

Moreover, in step 33 digital data are stored in the memory 19 defining the pressure and composition of the gas atmosphere to be used for these groups 20a, 20b, 20c. Thus, the digital data define different gas atmospheres and which of the gas atmospheres is to be used for each of the groups 20a, 20b, 20c. The number of gas atmospheres may be equal to or smaller than the number of groups 20a, 20b, 20c. In the latter case, the same gas atmosphere is used for two or more non-adjacent ones of the groups 20a, 20b, 20c.

The storing of the various digital data in the memory 19 may e.g. be carried out by inserting a removable data carrier storing the data into a corresponding reading device provided in the control unit 18, wherein the control unit 18 is operable for transferring the data from the removable data carrier to the memory 19. In addition or alternatively, the control unit 18 may be connected or connectable to a wired or wireless data transmission network over which the digital data to be stored in the memory 19 can be received by the control unit 18.

Next, based on the digital data the gas atmosphere in the chamber 3 is controlled to have the pressure and composition of the gas atmosphere associated with the group 20a, 20b, 20c to which the current layer belongs (step 34). At the beginning of the process this is the group 20a to which the very first layer to be provided on the top surface of the build platform 7 belongs. Once this has been done, the build platform 7 is positioned in the above-described manner to receive the current layer of powder material (step 35), and the powder feed pistons 6 and the powder spreading roller 9 are operated to provide the layer of powder material on the build platform 7 (step 36). The laser 12 and the mirror 14 are then operated to irradiate the layer in accordance with the corresponding structural digital data associated with the respective layer (step 37).

Following the irradiation of each of the layers it is determined whether the current layer is the last layer (step 38) and the process is ended if that is the case. Otherwise, it is determined if the subsequent layer belongs to a different group 20b associated with a different gas atmosphere. In the affirmative, the method reverts to step 34 for creating the different gas atmosphere, and otherwise the method reverts to step 35 for positioning the build platform 7 for receipt of the subsequent layer (step 39).

The above steps are repeated until the last layer has been irradiated and the object is completed (step 40).

A control of the gas atmosphere temperature and/or the beam size can be achieved similarly.

## Claims

1. A method of manufacturing a three-dimensional object by additive layer manufacturing, comprising the following steps:
- successively providing a plurality of layers (20a, 20b, 20c) of material in powder form, one on top of the other, on a support means (7) inside a chamber (3), and
- irradiating each layer with a laser beam (13) or particle beam prior to providing the subsequent layer, wherein each layer is irradiated selectively only in those portions of the layer corresponding to the three-dimensional object being manufactured and wherein the irradiation is carried out in such a manner that the material is melted or sintered locally in the corresponding portions, wherein a gas atmosphere having a controlled pressure and composition is maintained inside the chamber (3) at least during each of the irradiation steps,
**characterized in that**
- at least one of the pressure and the composition of the gas atmosphere inside the chamber (3) is controlled such that at least two different gas atmospheres having different predetermined pressures and/or compositions are present inside the chamber (3) during the irradiation of different ones of the layers, and
- the temperature of the gas atmosphere inside the chamber (3) is controlled such that at least two different temperatures of the gas atmosphere are present during the irradiation of different ones of the layers, and/or
- the temperature of the layer being irradiated is controlled such that the temperature of the layers is changed between the irradiation of one or more pairs of adjacent layers such that at least two different temperatures of the layer being irradiated are present during the irradiation of different ones of the layers.

2. The method according to claim 1, wherein the plurality of layers is constituted by at least two different groups (20a; 20b; 20c) of layers, each group including only one layer or multiple adjacent layers, wherein at least one of the pressure and the composition of the gas atmosphere inside the chamber (3) is changed between adjacent groups and wherein the same gas atmosphere having the same pressure and composition is present inside the chamber (3) during the irradiation of all of the layers belonging to the same group.

3. The method according to claim 1 or claim 2, wherein the plurality of layers is constituted by at least two different groups (20a; 20b; 20c) of layers, each group including only one layer or multiple adjacent layers, wherein
- the temperature of the gas atmosphere and/or of the layer being irradiated is changed between adjacent groups, and wherein during the irradiation of all of the layers belonging to the same group the same temperature of the gas atmosphere and/or of the layer being irradiated is utilized.

4. The method according to claim 2 orclaim 3, wherein the number of groups of layers is two or three.

5. The method according to any of claims 2 to 4, wherein for the group (20a) of layers including the first layer provided and/or for the group (20c) of layers including the last layer provided the corresponding gas atmosphere and the temperature of the gas atmosphere and/or of the respective layer during irradiation thereof are selected in order to obtain desired physical and/or chemical characteristics of the respective surface of the three-dimensional object (11).

6. The method according to any of the preceding claims, wherein for a plurality of adjacent ones of the layers at least one of the pressure and the composition of the gas atmosphere inside the chamber (3) is gradually changed between first and second predetermined values when moving from the first to the last layer of the plurality of adjacent layers.

7. The method according to any of the preceding claims, wherein for a plurality of adjacent ones of the layers
- the temperature of the gas atmosphere and/or of the layer being irradiated is gradually changed between first and second predetermined values when moving from the first to the last layer of the plurality of adjacent layers.

8. The method according to any of the preceding claims, wherein the composition of the gas atmosphere inside the chamber (3) is controlled such that the different gas atmospheres comprise different oxygen and/or different nitrogen levels.

9. The method according to any of the preceding claims, wherein the pressure and/or composition of the different gas atmospheres are selected such that the layers irradiated under different atmospheres have different physical characteristics.

10. The method according to any of the preceding claims, wherein the material in powder form is selected from the group consisting of metal material, plastic material, ceramic material and glass material.

11. The method according to any of the preceding claims, wherein the material in powder form is or comprises Ti or Ti alloy powder.

12. The method according to any of the preceding claims, wherein the material in powder form is or comprises steel.

13. An apparatus for manufacturing a three-dimensional object (11) by additive layer manufacturing using the method of any of the preceding claims, the apparatus (1) comprising:
a housing (2) defining a chamber (3),
a gas supply system (15) adapted for introducing gas into the chamber (3), a gas venting system (16) adapted for venting gas from the chamber (3),
a support means (7) disposed inside the chamber (3),
a powder delivery means (5, 6, 9) adapted for providing the plurality of layers (20a, 20b, 20c) of material in powder form one on top of the other on the support means (7),
a temperature control means (21) adapted for selectively controlling the temperature of the gas atmosphere present inside the chamber (3) and/or of the layers during irradiation thereof,
an irradiation device (12) adapted for irradiating each of the layers provided by the powder delivery means (5, 6, 9) on the support means (7) with a laser or particle beam (13),
a beam spot size control means (22) adapted for selectively controlling the spot size of a beam emitted by the irradiation device (12) on the layers during irradiation thereof,
a beam movement means (14) adapted for selectively irradiating only portions of each of the layers provided by the powder delivery means (5, 6, 9) on the support means (7),
a storage means (19) for storing a digital representation of a three-dimensional object in the form of a plurality of layers, and
a control unit (18) operatively coupled to the gas supply system (15), the gas venting system (16), the powder delivery means (5, 6, 9), the temperature control means (21), the irradiation device (12), the beam spot size control means (7), the beam movement means (14) and the storage means (19) and adapted for operating the powder delivery means (5, 6, 9), the irradiation device (12) and the beam movement means (14) to manufacture a three-dimensional object in accordance with a digital representation of the object stored in the storage means (19),
**characterized in that**
the storage means (19) is also adapted for storing, for each digital representation of a three-dimensional object stored in the storage means (19) and as a function of the layers of the digital representation,
- pressure and/or composition data representative of different gas atmospheres having different predetermined pressures and/or compositions, and/or
- temperature data representative of different gas atmosphere temperatures and/or layer temperatures, and
the control unit (18) is further adapted for
- controlling the pressure and composition of the gas atmosphere inside the chamber (3) in accordance with the pressure and/or composition data stored in the storage means (19) for the three-dimensional object (11) being manufactured by means of controlling the gas supply system (15) and the gas venting system (16),
- controlling the temperature of the gas atmosphere inside the chamber (3) in accordance with the temperature data stored in the storage means (19) for the three- dimensional object (11) being manufactured by means of controlling the temperature control means (21), and/or
- controlling the temperature of the layers in accordance with the temperature data stored in the storage means (19) for the three-dimensional object (11) being manufactured by means of controlling the temperature control means (21) such that the temperature of the layers is changed between the irradiation of one or more pairs of adjacent layers.

## Patentansprüche

1. Verfahren zur Herstellung eines dreidimensionalen Objekts durch additive Fertigung, das die folgenden Schritte aufweist:
- aufeinander folgendes Bereitstellen einer Vielzahl von Schichten (20a, 20b, 20c) aus Material in Pulverform übereinander auf einer Abstützeinrichtung (7) im Inneren einer Kammer (3) und
- Bestrahlung jeder Schicht mit einem Laserstrahl (13) oder Teilchenstrahl vor dem Bereitstellen der nachfolgenden Schicht, wobei jede Schicht selektiv nur in denjenigen Bereichen der Schicht bestrahlt wird, die dem dreidimensionalen Objekt entsprechen, das hergestellt wird, und wobei die Bestrahlung in der Weise durchgeführt wird, dass das Material in den entsprechenden Bereichen lokal geschmolzen oder gesintert wird, wobei zumindest während jedes der Bestrahlungsschritte eine Gasatmosphäre mit einem kontrollierten Druck und einer kontrollierten Zusammensetzung im Inneren der Kammer (3) aufrechterhalten wird,
**dadurch gekennzeichnet, dass**
- der Druck und/oder die Zusammensetzung der Gasatmosphäre im Inneren der Kammer (3) in der Weise gesteuert wird, dass zumindest zwei verschiedene Gasatmosphären mit verschiedenen vorbestimmten Drücken und/oder Zusammensetzungen während der Bestrahlung von verschiedenen der Schichten im Inneren der Kammer (3) vorhanden sind, und
- die Temperatur der Gasatmosphäre im Inneren der Kammer (3) in der Weise gesteuert wird, dass während der Bestrahlung von verschiedenen der Schichten zumindest zwei unterschiedliche Temperaturen der Gasatmosphäre vorliegen, und/oder
- die Temperatur der bestrahlten Schicht in der Weise gesteuert wird, dass die Temperatur der Schichten zwischen der Bestrahlung von einem oder mehreren Paaren benachbarter Schichten so geändert wird, dass zumindest zwei unterschiedliche Temperaturen der bestrahlten Schicht während der Bestrahlung von verschiedenen der Schichten vorliegen.

2. Verfahren nach Anspruch 1, bei dem die Vielzahl von Schichten aus mindestens zwei verschiedenen Gruppen (20a; 20b; 20c) von Schichten gebildet ist, wobei jede Gruppe nur eine Schicht oder mehrere benachbarte Schichten enthält, wobei der Druck und/oder die Zusammensetzung der Gasatmosphäre im Inneren der Kammer (3) zwischen benachbarten Gruppen geändert wird und wobei dieselbe Gasatmosphäre mit demselben Druck und derselben Zusammensetzung im Inneren der Kammer (3) während der Bestrahlung aller Schichten vorliegt, die zu derselben Gruppe gehören.

3. Verfahren nach Anspruch 1 oder Anspruch 2, bei dem die Vielzahl von Schichten aus mindestens zwei verschiedenen Gruppen (20a; 20b; 20c) von Schichten gebildet ist, wobei jede Gruppe nur eine Schicht oder mehrere benachbarte Schichten enthält, wobei
- die Temperatur der Gasatmosphäre und/oder der bestrahlten Schicht zwischen benachbarten Gruppen geändert wird und wobei während der Bestrahlung aller zu derselben Gruppe gehörenden Schichten dieselbe Temperatur der Gasatmosphäre und/oder der bestrahlten Schicht verwendet wird.

4. Verfahren nach Anspruch 2 oder Anspruch 3, bei dem die Anzahl der Gruppen von Schichten zwei oder drei beträgt.

5. Verfahren nach einem der Ansprüche 2 bis 4, bei dem für die Gruppe (20a) von Schichten, die die erste bereitgestellte Schicht enthält, und/oder für die Gruppe (20c) von Schichten, die die letzte bereitgestellte Schicht enthält, die entsprechende Gasatmosphäre und die Temperatur der Gasatmosphäre und/oder der jeweiligen Schicht während ihrer Bestrahlung ausgewählt werden, um gewünschte physikalische und/oder chemische Eigenschaften der jeweiligen Oberfläche des dreidimensionalen Objekts (11) zu erhalten.

6. Verfahren nach einem der vorhergehenden Ansprüche, bei dem für eine Vielzahl von benachbarten der Schichten der Druck und/oder die Zusammensetzung der Gasatmosphäre im Inneren der Kammer (3) beim Übergang von der ersten zur letzten Schicht der Vielzahl benachbarter Schichten allmählich zwischen ersten und zweiten vorbestimmten Werten geändert wird.

7. Verfahren nach einem der vorhergehenden Ansprüche, bei dem für eine Vielzahl von benachbarten der Schichten
- die Temperatur der Gasatmosphäre und/oder der bestrahlten Schicht beim Übergang von der ersten zur letzten Schicht der Vielzahl benachbarter Schichten allmählich zwischen ersten und zweiten vorbestimmten Werten geändert wird.

8. Verfahren nach einem der vorhergehenden Ansprüche, bei dem die Zusammensetzung der Gasatmosphäre im Inneren der Kammer (3) in der Weise gesteuert wird, dass die verschiedenen Gasatmosphären unterschiedliche Sauerstoff- und/oder Stickstoffniveaus aufweisen.

9. Verfahren nach einem der vorhergehenden Ansprüche, bei dem der Druck und/oder die Zusammensetzung der verschiedenen Gasatmosphären in der Weise gewählt wird, dass die unter verschiedenen Atmosphären bestrahlten Schichten unterschiedliche physikalische Eigenschaften aufweisen.

10. Verfahren nach einem der vorhergehenden Ansprüche, bei dem das Material in Pulverform aus der Gruppe ausgewählt ist, die aus Metallmaterial, Kunststoffmaterial, Keramikmaterial und Glasmaterial besteht.

11. Verfahren nach einem der vorhergehenden Ansprüche, bei dem das Material in Pulverform Ti- oder Ti-Legierungspulver ist oder aufweist.

12. Verfahren nach einem der vorhergehenden Ansprüche, bei dem das Material in Pulverform Stahl ist oder aufweist.

13. Vorrichtung zur Herstellung eines dreidimensionalen Objekts (11) durch additive Fertigung unter Verwendung des Verfahrens nach einem der vorhergehenden Ansprüche, wobei die Vorrichtung (1) aufweist:
ein Gehäuse (2), das eine Kammer (3) bildet,
ein Gaszufuhrsystem (15), das zum Einleiten von Gas in die Kammer (3) angepasst ist,
ein Gasentlüftungssystem (16), das zum Entlüften von Gas aus der Kammer (3) angepasst ist,
eine im Inneren der Kammer (3) angeordnete Abstützeinrichung (7),
eine Pulverzuführeinrichtung (5, 6, 9), die angepasst ist, die mehreren Schichten (20a, 20b, 20c) des Materials in Pulverform übereinander auf der Abstützeinrichtung (7) bereitzustellen,
eine Temperatursteuereinrichtung (21), die angepasst ist, um die Temperatur der im Inneren der Kammer (3) vorhandenen Gasatmosphäre und/oder der Schichten während ihrer Bestrahlung wahlweise zu steuern,
eine Bestrahlungsvorrichtung (12), die angepasst ist, um jede der von der Pulverzuführeinrichtung (5, 6, 9) auf der Abstützeinrichtung (7) bereitgestellten Schichten mit einem Laser- oder Teilchenstrahl (13) zu bestrahlen,
eine Strahlfleckgrößen-Steuereinrichtung (22), die angepasst ist, um die Strahlfleckgröße eines Strahls wahlweise zu steuern, der von der Bestrahlungsvorrichtung (12) auf die Schichten während ihrer Bestrahlung abgegeben wird,
eine Strahlbewegungseinrichtung (14), die angepasst ist, um selektiv nur Bereich von jeder der von der Pulverzuführeinrichtung (5, 6, 9) auf der Abstützeinrichtung (7) bereitgestellten Schichten zu bestrahlen,
eine Speichereinrichtung (19) zum Speichern einer digitalen Repräsentation eines dreidimensionalen Objekts in Form einer Vielzahl von Schichten und
eine Steuereinheit (18), die betriebsmäßig mit dem Gaszufuhrsystem (15), dem Gasentlüftungssystem (16), der Pulverzuführeinrichtung (5, 6, 9), der Temperatursteuereinrichtung (21), der Bestrahlungsvorrichtung (12), der Strahlfleckgrößen-Steuereinrichtung (7), der Strahlbewegungseinrichtung (14) und der Speichereinrichtung (19) gekoppelt und angepasst ist, um die Pulverzuführeinrichtung (5, 6, 9), die Bestrahlungsvorrichtung (12) und die Strahlbewegungseinrichtung (14) zu betreiben, um ein dreidimensionales Objekt in Übereinstimmung mit einer in der Speichereinrichtung (19) gespeicherten digitalen Repräsentation des Objekts herzustellen,
**dadurch gekennzeichnet, dass**
die Speichereinrichtung (19) auch angepasst ist, um für jede in der Speichereinrichtung (19) gespeicherte digitale Repräsentation eines dreidimensionalen Objekts und in Abhängigkeit von den Schichten der digitalen Repräsentation
- Druck- und/oder Zusammensetzungsdaten, die für verschiedene Gasatmosphären mit unterschiedlichen vorbestimmten Drücken und/oder Zusammensetzungen repräsentativ sind, und/oder
- Temperaturdaten zu speichern, die für verschiedene Gasatmosphärentemperaturen und/oder Schichttemperaturen repräsentativ sind, und die Steuereinheit (18) ferner angepasst ist, um
- den Druck und die Zusammensetzung der Gasatmosphäre im Inneren der Kammer (3) in Übereinstimmung mit den Druck- und/oder Zusammensetzungsdaten, die für das dreidimensionale Objekt (11), das hergestellt wird, in der Speichereinrichtung (19) gespeichert sind, durch Steuerung des Gaszuführsystems (15) und des Gasentlüftungssystems (16) zu steuern,
- die Temperatur der Gasatmosphäre im Inneren der Kammer (3) in Übereinstimmung mit den Temperaturdaten, die für das dreidimensionale Objekt (11), das hergestellt wird, in der Speichereinrichtung (19) gespeichert sind, durch Steuerung der Temperatursteuereinrichtung (21) zu steuern, und/oder
- die Temperatur der Schichten in Übereinstimmung mit den Temperaturdaten, die für das dreidimensionale Objekt (11), das hergestellt wird, in der Speichereinrichtung (19) gespeichert sind, durch Steuerung der Temperatursteuereinrichtung (21) in der Weise zu steuern, dass die Temperatur der Schichten zwischen der Bestrahlung von einem oder mehreren Paaren benachbarter Schichten geändert wird.

## Revendications

1. Procédé de fabrication d'un objet tridimensionnel par fabrication additive par couches, comprenant les étapes suivantes:
- fournir successivement une pluralité de couches (20a, 20b, 20c) de matériau sous forme de poudre, l'une au-dessus de l'autre, sur un moyen de support (7) à l'intérieur d'une chambre (3), et
- irradier chaque couche avec un faisceau laser (13) ou un faisceau de particules avant de fournir la couche suivante, chaque couche étant irradiée sélectivement seulement dans les parties de la couche correspondant à l'objet tridimensionnel en cours de fabrication et l'irradiation étant effectuée de telle manière que le matériau est fondu ou fritté localement dans les parties correspondantes,
une atmosphère gazeuse ayant une pression et une composition contrôlées étant maintenue à l'intérieur de la chambre (3) au moins pendant chacune des étapes d'irradiation,
**caractérisé en ce que**
- au moins l'une de la pression et de la composition de l'atmosphère gazeuse à l'intérieur de la chambre (3) est contrôlée de telle sorte qu'au moins deux atmosphères gazeuses différentes ayant des pressions et/ou compositions prédéterminées différentes sont présentes à l'intérieur de la chambre (3) pendant l'irradiation de couches différentes, et
- la température de l'atmosphère gazeuse à l'intérieur de la chambre (3) est contrôlée de telle sorte qu'au moins deux températures différentes de l'atmosphère gazeuse sont présentes pendant l'irradiation de couches différentes, et/ou
- la température de la couche irradiée est contrôlée de telle sorte que la température des couches est modifiée entre l'irradiation d'une ou plusieurs paires de couches adjacentes, de telle sorte qu'au moins deux températures différentes de la couche irradiée sont présentes pendant l'irradiation de couches différentes.

2. Procédé selon la revendication 1, dans lequel la pluralité de couches est constituée d'au moins deux groupes différents (20a; 20b; 20c) de couches, chaque groupe comprenant une seule couche ou plusieurs couches adjacentes, au moins l'une de la pression et de la composition de l'atmosphère gazeuse à l'intérieur de la chambre (3) étant modifiée entre des groupes adjacents et la même atmosphère gazeuse ayant la même pression et la même composition étant présente à l'intérieur de la chambre (3) pendant l'irradiation de toutes les couches appartenant au même groupe.

3. Procédé selon la revendication 1 ou la revendication 2, dans lequel la pluralité de couches est constituée d'au moins deux groupes différents (20a ; 20b ; 20c) de couches, chaque groupe comprenant une seule couche ou plusieurs couches adjacentes,
- la température de l'atmosphère gazeuse et/ou de la couche irradiée étant modifiée entre des groupes adjacents, et, pendant l'irradiation de toutes les couches appartenant au même groupe, la même température de l'atmosphère gazeuse et/ou de la couche irradiée étant utilisée.

4. Procédé selon la revendication 2 ou la revendication 3, dans lequel le nombre de groupes de couches est deux ou trois.

5. Procédé selon l'une quelconque des revendications 2 à 4, dans lequel, pour le groupe (20a) de couches comprenant la première couche fournie et/ou pour le groupe (20c) de couches comprenant la dernière couche fournie, l'atmosphère gazeuse correspondante et la température de l'atmosphère gazeuse et/ou de la couche respective pendant son irradiation sont sélectionnées afin d'obtenir des caractéristiques physiques et/ou chimiques souhaitées de la surface respective de l'objet tridimensionnel (11).

6. Procédé selon l'une quelconque des revendications précédentes, dans lequel, pour une pluralité de couches adjacentes, au moins l'une de la pression et de la composition de l'atmosphère gazeuse à l'intérieur de la chambre (3) est modifiée graduellement entre des première et deuxième valeurs prédéterminées lors de la transition de la première à la dernière couche de la pluralité de couches adjacentes.

7. Procédé selon l'une quelconque des revendications précédentes, dans lequel pour une pluralité de couches adjacentes parmi les couches
- la température de l'atmosphère gazeuse et/ou de la couche irradiée est modifiée graduellement entre des première et deuxième valeurs prédéterminées lors de la transition de la première à la dernière couche de la pluralité de couches adjacentes.

8. Procédé selon l'une quelconque des revendications précédentes, dans lequel la composition de l'atmosphère gazeuse à l'intérieur de la chambre (3) est contrôlée de telle sorte que les différentes atmosphères gazeuses comprennent des niveaux d'oxygène et/ou d'azote différents.

9. Procédé selon l'une quelconque des revendications précédentes, dans lequel la pression et/ou la composition des différentes atmosphères gazeuses sont choisies de telle sorte que les couches irradiées sous différentes atmosphères présentent des caractéristiques physiques différentes.

10. Procédé selon l'une quelconque des revendications précédentes, dans lequel le matériau sous forme de poudre est choisi dans le groupe constitué par le matériau métallique, le matériau plastique, le matériau céramique et le matériau de verre.

11. Procédé selon l'une quelconque des revendications précédentes, dans lequel le matériau sous forme de poudre est ou comprend une poudre de Ti ou d'alliage de Ti.

12. Procédé selon l'une quelconque des revendications précédentes, dans lequel le matériau sous forme de poudre est ou comprend de l'acier.

13. Appareil pour la fabrication d'un objet tridimensionnel (11) par fabrication additive par couches utilisant le procédé de l'une quelconque des revendications précédentes, l'appareil (1) comprenant:
un boîtier (2) définissant une chambre (3),
un système d'alimentation en gaz (15) adapté pour introduire du gaz dans la chambre (3),
un système d'évacuation de gaz (16) adapté pour évacuer le gaz de la chambre (3),
un moyen de support (7) disposé à l'intérieur de la chambre (3),
un moyen de distribution de poudre (5, 6, 9) adapté pour fournir la pluralité de couches (20a, 20b, 20c) de matériau sous forme de poudre l'une au-dessus de l'autre sur le moyen de support (7),
un moyen de contrôle de la température (21) adapté pour contrôler sélectivement la température de l'atmosphère gazeuse présente à l'intérieur de la chambre (3) et/ou des couches pendant leur irradiation,
un dispositif d'irradiation (12) adapté pour irradier chacune des couches fournies par le moyen de distribution de poudre (5, 6, 9) sur le moyen de support (7) avec un faisceau laser ou un faisceau de particules (13),
un moyen de contrôle de la taille du spot du faisceau (22) adapté pour contrôler sélectivement la taille du spot d'un faisceau émis par le dispositif d'irradiation (12) sur les couches pendant leur irradiation,
un moyen de déplacement de faisceau (14) adapté pour n'irradier sélectivement que des parties de chacune des couches fournies par le moyen de distribution de poudre (5, 6, 9) sur le moyen de support (7),
un moyen de stockage (19) pour stocker une représentation numérique d'un objet tridimensionnel sous la forme d'une pluralité de couches, et
une unité de contrôle (18) couplée fonctionnellement au système d'alimentation en gaz (15), au système d'évacuation de gaz (16), au moyen de distribution de poudre (5, 6, 9), au moyen de contrôle de la température (21), au dispositif d'irradiation (12), au moyen de contrôle de la taille du spot du faisceau (7), au moyen de déplacement du faisceau (14) et au moyen de stockage (19) et adapté pour faire fonctionner le moyen de distribution de poudre (5, 6, 9), le dispositif d'irradiation (12) et le moyen de déplacement du faisceau (14) pour fabriquer un objet tridimensionnel conformément à une représentation numérique de l'objet stockée dans le moyen de stockage (19),
**caractérisé en ce que**
le moyen de stockage (19) est également adapté pour stocker, pour chaque représentation numérique d'un objet tridimensionnel stocké dans le moyen de stockage (19) et en fonction des couches de la représentation numérique,
- des données de pression et/ou de composition représentatives de différentes atmosphères gazeuses ayant différentes pressions et/ou compositions prédéterminées, et/ou
- des données de température représentatives de différentes températures de l'atmosphère gazeuse et/ou de la couche, et
l'unité de contrôle (18) est en outre adaptée pour
- contrôler la pression et la composition de l'atmosphère gazeuse à l'intérieur de la chambre (3) conformément aux données de pression et/ou de composition stockées dans le moyen de stockage (19) pour l'objet tridimensionnel (11) en cours de fabrication en contrôlant le système d'alimentation en gaz (15) et le système d'évacuation de gaz (16),
- contrôler la température de l'atmosphère gazeuse à l'intérieur de la chambre (3) conformément aux données de température stockées dans le moyens de stockage (19) pour l'objet tridimensionnel (11) en cours de fabrication en contrôlant le moyens de contrôle de la température (21), et/ou
- contrôler la température des couches conformément aux données de température stockées dans le moyen de stockage (19) pour l'objet tridimensionnel (11) en cours de fabrication en contrôlant le moyen de contrôle de température (21) de telle sorte que la température des couches soit modifiée entre l'irradiation d'une ou plusieurs paires de couches adjacentes.
